# EUROPEAN PATENT SPECIFICATION

(11) **EP 3 206 894 B1**
(45) Date of publication and mention of the grant of the patent: **26.12.2018**
(21) Application number: 15790039.0
(22) Date of filing: 13.10.2015
(51) Int. Cl.: B60C 23/00, B60C 25/00, B29D 30/00

(54) **APPARATUS AND METHOD FOR INSTALLATION AND REMOVAL OF AN ELECTRONIC COMPONENT FOR A TIRE**
VORRICHTUNG UND METHODE ZUR INSTALLATION SOWIE ENTFERNUNG VON ELEKTRONISCHEN KOMPONENTEN AN EINEM REIFEN
DISPOSITIF ET METHODE D'INSTALLATION ET D'EXTRACTION DE COMPOSANTS ELECTRONIQUE SUR UN PNEUMATIQUE

(30) Priority: 14.10.2014 DE 102014220790
(43) Date of publication of application: 23.08.2017
(73) Proprietor: Continental Automotive GmbH, 30165 Hannover (DE)
(72) Inventor: LANDIS, Steven, WA 98372 Puyallup (US)
(86) International application number: PCT/EP2015/073679
(87) International publication number: WO 2016/059052

(56) References cited:
- WO-A1-2007/004228
- DE-U1-202014 004 098
- US-A1- 2008 143 511

## Description

The invention relates to an apparatus for installation and removal of electronic components for a tire, such as a pressure sensor unit, and to a method for installing or removing such an electronic component for a tire.

Tire pressure monitoring systems (TPMS) are increasingly used for monitoring tire pressure directly within a vehicle. Some tire pressure sensors are integrated into the tire valve, wherein a sensing part is attached to an inner part of the valve, while an outer part of the valve may be used as an antenna for transferring signals representing the measured pressure inside the tire.

Another type exists, which does not depend on a tire valve. A sensor of this type may be even more compact and is placed in an elastic container attached to an inner liner of the respective tire and comprises an integrated antenna. In particular, the installation and/or removal and replacement of such a tire pressure sensor from an elastic container may partially exert an excess stress on the material of the container, which then may need to be replaced, too. Moreover, it may also be cumbersome and/or time consuming for installation and removal of the sensor to/from the elastic container without a specific tool apparatus as an aid.

DE 20 2014 004098 U1 discloses an apparatus and a method for installation and removal of an electronic component for a tire according to the respective preambles of claims 1 and 12.

US 2008/143511 A1 discloses a method for affixing an electronic device having an elongate dipole antenna to a substrate surface which includes: positioning a picking apparatus adjacent to the electronic device, the picking apparatus having at least one antenna positioning means such as a magnet positioned adjacent the electronic device; activating the antenna positioning means; moving the opposite antenna ends into a captured relationship with the picking apparatus by means of the antenna positioning means; moving the picking apparatus to a position adjacent the substrate surface; engaging the substrate surface with the picking apparatus; and depositing the electronic device to the substrate surface.

WO 2007/004228 A1 discloses a surgical fastener having a first element defining an axis of the fastener, and two or more prongs attached to the first element at hinge regions. Deploying the fastener involves bending the prongs at the hinges so as to increase the distance of the prong tips from the axis and locking the fastener in this deployed configuration.

It is an object of the invention to propose an apparatus and a method for installation and removal of an electronic component for a tire, especially a tire pressure sensor unit, e.g. an electronic component independent from a tire valve, which do not lead to damaging the elastic container and which is reliable and simple.

The object is met by an apparatus having the features of independent claim 1 and a method having the features of independent claim 12. Advantageous embodiments and further improvements may be gathered from the sub-claims and the following description.

An apparatus for installation and removal of an electronic component for a tire is proposed, the apparatus comprising an expansion device having a plurality of movably supported longitudinal prongs having a main extension direction, wherein the expansion device is adapted for moving at least a part of the plurality of prongs between a neutral position with a least distance between the prongs and at least one expansion position with a distance between the prongs exceeding the least distance. The prongs comprise prong tips, which each comprise a curved engagement surface, which faces into a direction at an angle relative to the main extension direction of the respective prong, i.e. into a direction different from the main extension direction of the respective prong, and preferably away from the other prongs, wherein each prong is adapted for engaging an exposed top lip of an elastic container, in which the electronic component is storable. The expansion device is adapted for moving at least a part of the plurality of prongs to at least one of the at least one expansion position with the engagement surfaces engaging the top lip of the container, in which expansion position the top lip is expanded.

The expansion device may be provided as a sleeve expander tool, which is a pliers-like tool having two handles for being gripped and compressed by the hand of a user, thereby moving at least a part of the plurality of prongs away from each other. At least a part of the prongs are arranged on movable parts of the expansion device such that they are parallel to each other and conduct a motion from a neutral position, in which the prongs typically are as near to each other as possible and arranged substantially parallel to each other, into a radially outwards direction. The motion paths of all prongs may comprise a common intersection point near the neutral position and the motion paths preferably enclose the same angles with the motion paths of the respective neighboring prongs.

Such an expansion device allows inserting the prongs into a sleeve of an elastic material, wherein the sleeve is expanded, i.e. widened, through compressing the handles of the expansion device.

It is advantageous to use prongs made from a metallic material, as they may clearly extend from their attachment positions and therefore should be as stiff as possible.

An elastic container, which is attached to an inner liner of a tire or built directly (molded) into the inner liner of a tire, is adapted for housing the electronic component, which for example comprises a tire pressure sensor unit. As this container, which may be made from rubber or another elastic and robust material, follows the rotation of the tire, it should firmly hold the electronic component. For this purpose it comprises the top lip, which blocks any motion or release of the electronic component out of the inner space of the container.

However, when an electronic component is to be installed or removed from such an elastic container, the prong tips are brought into engagement with the top lip of the container. By compressing the handles or any other actuating means present in the expansion device, the prongs are guided outwards and the top lip is widened. Hence, the clearance of the top lip will at one point exceed the width of the electronic component and allows installation or removal of the electronic component.

The curved engagement surfaces enclose an angle, which is not zero, with the main extension direction. Hence, the engagement surfaces particularly face radially outwards and, resultantly, provide an as smoothly as possible contact surface with the top lip. Thereby, the container may be prevented from damage during the installation and removal of the electronic component.

Hence, the apparatus according to the invention provides a simple, yet reliable tool, which is gentle to the container residing in the tire, for inserting and removal of electronic components, especially tire pressure sensors, e.g. of a valveless type, i.e. valve independent tire pressure sensor units. The apparatus is furthermore cost effective, as existing expansion devices may be modified to meet the above characteristics.

Advantageously, the prongs are arranged substantially parallel to each other. This may be helpful if expansion devices are used, which may be equipped with prongs that stay parallel to each other during their movement.

Preferably, the prongs are arranged substantially parallel to each other both in the neutral position and in the at least one expansion position, in particular in the at least one of the at least one expansion position in which the engagement surfaces engage the top lip of the container, i.e. the prongs are preferably arranged substantially parallel to each other both in the neutral position and in the at least one expansion position in which expansion position the top lip is expanded. The prongs thus are arranged such that they stay parallel to each other during their movement between the neutral position and the at least one expansion position.

Still further, the curved engagement surface of each of the plurality of prongs may face into a direction perpendicular to the main extension direction of the respective prong. The expansion of the top lip of the container is conducted in the direction of the prong tip motion.

In an advantageous embodiment, the engagement surfaces are formed as a channel comprising at least a C-profile, wherein the channel at least partially extends along a segment of a circle on a plane spanned by the plurality of the prongs. The C-profile is to be understood as a profile, which comprises a curved contour with a closed side and an open side, wherein in this case the open side faces radially outwards for allowing engaging with the top lip of the container. The channel, in which the engagement surface is created, comprises the circle segment shape in order to at least substantially follow the inner contour of the top lip in its non-extended form. Hence, when the engagement surfaces engage with the top lip, a smooth contact is accomplished. Tabs may also be added to the top lip of the container to further bolster the tool engagement.

In a further embodiment, the C-profile is open in a direction facing away from the prongs.

In an advantageous embodiment, the cross-sectional profile of the channel comprises legs arranged at a distance to each other in the main extension direction of the respective prong, i.e. in a direction parallel to the longitudinal axis of the respective prong, wherein the distance between the legs is 5 mm or less. The expression "in the main extension direction of the respective prong" is to be understood that the distance between the parallel legs is measured in a direction parallel to the longitudinal axis of the respective prong. This means that the legs preferably extend vertically to the prong's longitudinal axis. In order to firmly engage with the top lip, the distance is 5 mm or less, which means that the maximum distance between the two legs at the open end of the C-shaped profile is 5 mm or less.

In an advantageous embodiment, the legs of the cross-sectional profile of the channel are furthermore parallel to each other, such that the top lip is surrounded by the legs in a pliers-like manner. This may further prevent the top lip from escaping the channel during its expansion.

The prong tips may furthermore be realized through a metallic material. Especially due to the small sizes of the prong tips, which depend on the diameter of the top lip, the metallic material provides a sufficient strength and rigidity, such that the prong tips are reliably holding the top lip and that the apparatus may be used for numerous installation and removal processes without any noticeable wear.

It is preferred that each prong and the respective prong tip are formed integrally with each other, i.e. they are realized through one piece. This may be accomplished through a casting or forging process. It is not necessary to separately manufacture the prong tips and attach them to the prongs. Altogether, this allows improving the structural stability of the prong tips and the expansion device. However, welding or use of another rigid and durable method to connect a separate prong tip to the prong is a method according to a further embodiment.

Still further, the engagement surfaces may comprise a coating of a plastic material. This may be made from any material such as PTFE (Polytetrafluoroethylene), PU (Polyurethane), PE (Polyethylene), ABS (Acrylonitrile butadiene styrene) or any other wear-resistant plastic. Using the plastic coating, the engagement surface comprises a smooth texture even if the user holds the expansion device with a wrong alignment relative to the elastic container, which may clearly reduce the danger of damaging the top lip.

In yet another advantageous embodiment, the expansion device may be a sleeve type expansion tool with replaceable prongs. Consequently, the apparatus according to the invention may comprise a set of replacement prongs that are attachable to a sleeve type expansion tool. The tool may also be adapted for use as either a hand tool or as an automated tool (robotics) for assembly line use.

The invention is also related to a method for installing or removing an electronic component for a tire comprising the steps of engaging prong tips of a plurality of movably supported longitudinal prongs having a main extension direction of an expansion device in an exposed top lip of an elastic container, in which the electronic component is storable, wherein the expansion device is adapted for moving at least a part of the plurality of prongs between a neutral position with a least distance between the prongs and at least one expansion position with a distance between the prongs exceeding the least distance, wherein the prong tips each comprise a curved engagement surface, which faces into a direction at an angle relative to the main extension direction of the respective prong and preferably away from the other prongs, moving at least a part of the prong tips into an expanded position such that the top lip is expanded from an initial position into an expanded position, installing or removing the electronic component, i.e. installing the electronic component into the elastic container or removing the electronic component from the elastic container, and releasing the prong tips, such that the top lip of the container reverts to the initial position. This means, that the prong tips move back into the direction of the neutral position. The initial position of the top lip is to be considered a relieved position of the top lip after the introduction of force from the engagement surfaces is interrupted.

Preferably, the prongs are arranged such that they stay parallel to each other during their movement between the neutral position and the at least one expansion position, i.e. the prongs stay parallel to each other while moving at least a part of the prong tips into the expanded position such that the top lip is expanded from the initial position into the expanded position.

Other characteristics, advantages and potential applications of the present invention result from the following description of the exemplary embodiments illustrated in the figures. Furthermore, identical or similar objects are identified by the same reference numerals in the figures.
Fig. 1 shows an elastic container and an apparatus according to an embodiment of the invention.
Fig. 2 shows a flow diagram of a method for installing or removing an electronic component of a tire according to an embodiment of the invention.

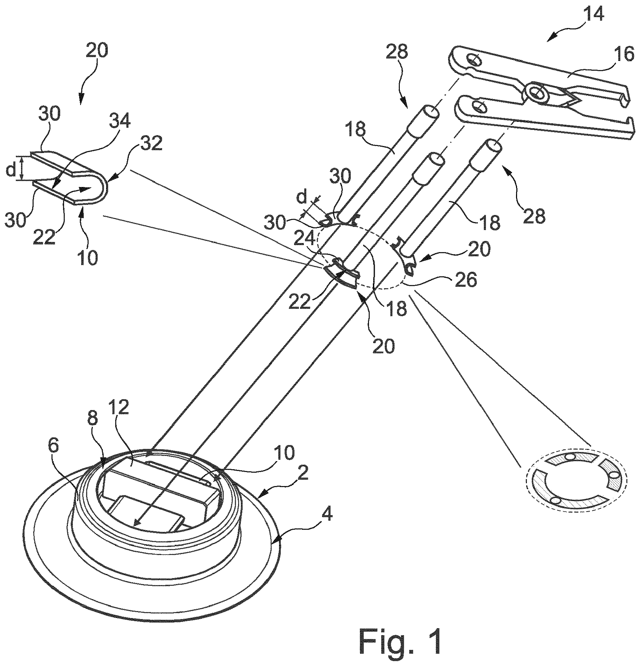

Fig. 1 shows an elastic container 2 mountable to an inner liner of a vehicle tire (not illustrated), which container 2 provides a hollow space extending from a bottom surface 4, surrounded by a wall 6 and delimited by a top lip 8 defining an opening. Inside the hollow space an electronic component 10 is located, which, in the illustrated embodiment, comprises an integrated antenna 12 that slightly protrudes out of the container 2 for transmitting data, for example tire pressure data, to an electronic control unit of the vehicle (not illustrated). In the following, the electronic component 10 may also be referred to as sensor or tire pressure sensor. However, Fig. 1 only shows an example of an electronic component 10, such that the scope of protection is not limited to the use of a tire pressure sensor, but it may additionally or alternatively comprise other electronic components such as a temperature sensor. The top lip 8 firmly holds the electronic component 10 in the inner space by blocking any motion of at least the outer edges of the electronic component 10 covered by the top lip 8.

For removing or installing the electronic component 10 into the container 2, an apparatus 14 is provided, which comprises an expansion device 16 having exemplarily three prongs 18, but may also be adapted down to two or up to four or more prongs, which in the illustrated embodiment are distributed in a symmetric arrangement and parallel to each other.

The prongs 18 are arranged substantially parallel to each other both in a neutral position with a least distance between the prongs 18 and in at least one expansion position with a distance between the prongs 18 exceeding the least distance. The prongs 18 thus are arranged such that they stay parallel to each other during their movement between the neutral position and the at least one expansion position.

Each prong 18 comprises a prong tip 20, which has an engagement surface 22 created by a channel-like structure 24 with a C-shaped profile cross-section, which is open in a lateral direction. All channel-like structures 24 are arranged at the prong tips 20 such that they extend over a segment of a circle 26 on a plane spanned by and arranged vertical to the prongs 18.

Advantageously, the curvature and a distance d between two opposite legs 30 of each C-profile is chosen so as to correspond with the cross-sectional profile of the top lip 8, under consideration of a sufficient tolerance that easily allows the engagement.

The expansion device 14 is adapted for moving the prongs 18 away from each other starting from the neutral position with the prongs 18 positioned as near to each other as possible or necessary, into the at least one expansion position. Hereby, the distance between the prongs 18 is increased, preferably in a symmetrical fashion. Due to the rigid arrangement of the prongs 18 on the expansion tool 16, the prong tips 20 are facing an increasing distance, too. When the top lip 8 is engaged by the engagement surfaces 22 in a pliers-like manner, it will consequently be expanded. This means, that the clearance or the diameter of the top lip is increased until it exceeds the diameter of the electronic component 10. In this position, the electronic component 10 may easily be taken out from the inner space of the container 2 or be installed into the inner space of the container 2.

For providing a reliable engagement with the top lip 8, the prong tips 20 comprise two parallel legs 30, which are connected by means of an exemplarily circularly curved base 32.

The prong tips 20 may be made of a metallic material, such as the prongs 18, for increasing the rigidity and structural stability. It is even preferred that the prongs 18 and the prong tips 20 are formed integrally with each other, i.e. are realized as one piece, which means that the prong tips 20 are not manufactured separately. For improving the wear characteristics, the engagement surfaces 22 may comprise a coating 34 of a plastic material. The prongs 18 may comprise a prong base 28, which may be attachable to a sleeve type expansion tool.

Altogether, the apparatus according to the invention allows a simple, reliable and smooth installation and removal of an electronic component for example comprising a pressure sensor into an elastic container.

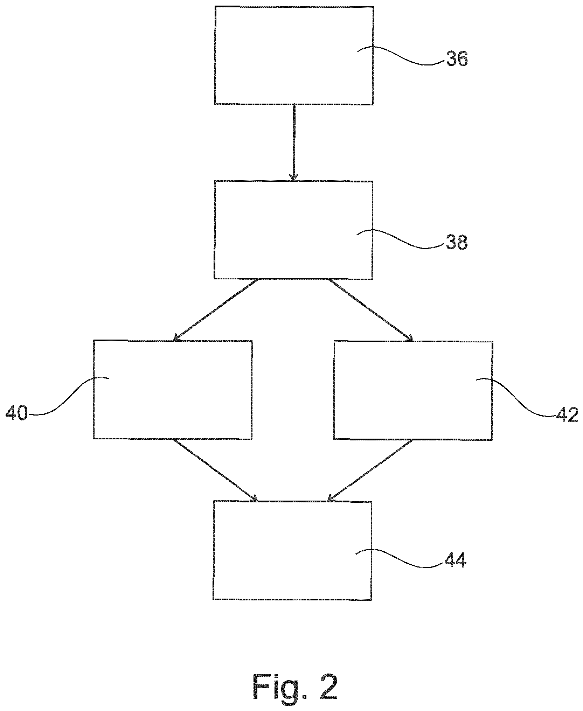

Fig. 2 shows a flow diagram of a method for installing or removing an electronic component 10 of a tire according to an embodiment of the invention, wherein additional reference is made to the components illustrated in Fig. 1.

The method comprises a step 36 of engaging prong tips 20 of at least a part of a plurality of movably supported longitudinal prongs 18 having a main extension direction, of an expansion device 16 in an exposed top lip 8 of an elastic container 2, in which the electronic component 10 is storable, wherein the expansion device 16 is adapted for moving at least a part of the plurality of prongs 18 between a neutral position with a least distance between the prongs 18 and at least one expansion position with a distance between the prongs 18 exceeding the least distance, wherein the prong tips 20 each comprise a curved engagement surface 22, which faces into a direction at an angle relative to the main extension direction of the respective prong 18 and away from the other prongs 18.

The method further comprises a step 38 of moving the prong tips 20 into an expanded position such that the top lip 8 is expanded from an initial position into an expanded position.

Preferably, the prongs 18 are arranged such that they stay parallel to each other while moving the prong tips 20 into the expanded position.

Additionally, the method comprises a step 40 of installing the electronic component 10 into the elastic container 2 or a step 42 of removing the installed electronic component 10 from the elastic container 2.

Moreover, the method comprises a step 44 of releasing the prong tips 20, such that the top lip 8 of the container 2 reverts to the initial position.

### REFERENCE NUMERALS

- 2: Container
- 4: Bottom surface
- 6: Wall
- 8: Top lip
- 10: Electronic component
- 12: Antenna
- 14: Apparatus
- 16: Expansion device
- 18: Prong
- 20: Prong tip
- 22: Engagement surface
- 24: Structure
- 26: Circle
- 28: Prong base
- 30: Leg
- 32: Base
- 34: Coating
- 36: Step
- 38: Step
- 40: Step
- 42: Step
- 44: Step

- d: distance

## Claims

1. Apparatus (14) for installation and removal of an electronic component (10) for a tire, **characterized in that** the apparatus (14) comprises an expansion device (16) having a plurality of movably supported longitudinal prongs (18) having a main extension direction,
wherein the expansion device (16) is adapted for moving at least a part of the plurality of prongs (18) between a neutral position with a least distance between the prongs (18) and at least one expansion position with a distance between the prongs (18) exceeding the least distance,
wherein the prongs (18) comprise prong tips (20), which each comprise a curved engagement surface (22), which faces into a direction at an angle relative to the main extension direction of the respective prong (18),
wherein each prong (18) is adapted for engaging an exposed top lip (8) of an elastic container (2), in which the electronic component (10) is storable and
wherein the expansion device (16) is adapted for moving at least a part of the plurality of prongs (18) to at least one of the at least one expansion position with the engagement surfaces (22) engaging the top lip (8) of the container (2), in which expansion position the top lip is expanded.

2. The apparatus (14) of claim 1,
wherein the prongs (18) are arranged substantially parallel to each other.

3. The apparatus (14) of claim 1 or 2,
wherein the curved engagement surface (22) of each of the plurality of prongs (18) faces into a direction perpendicular to the main extension direction of the respective prong (18).

4. The apparatus (14) of any of the previous claims,
wherein the engagement surface (22) is formed as a channel comprising a C-profile, wherein the channel at least partially extends along a segment of a circle surrounding the prongs (18) .

5. The apparatus (14) of claim 4,
wherein the C-profile is open in a direction facing away from the prongs.

6. The apparatus (14) of claim 4 or 5,
wherein the channel comprises legs (30) arranged at a distance to each other in the main extension direction of the respective prong (18),
wherein the distance between the legs (30) is 5 mm or less.

7. The apparatus (14) of claim 6,
wherein the legs (30) are parallel to each other.

8. The apparatus (14) of any of the previous claims,
wherein the prong tips (20) comprise a metallic material.

9. The apparatus (14) of any of the previous claims,
wherein each prong (18) and the respective prong tip (20) are formed integrally with each other.

10. The apparatus (14) of any of the previous claims,
wherein the engagement surfaces (22) comprise a coating (34) of a plastic material.

11. The apparatus (14) of any of the previous claims,
wherein the expansion device (16) is a sleeve type expansion tool with replaceable prongs.

12. Method for installing or removing an electronic component (10) for a tire, **characterized in that** the method comprises the steps of:
- engaging prong tips (20) of at least a part of a plurality of movably supported longitudinal prongs (18) having a main extension direction, of an expansion device (16) in an exposed top lip (8) of an elastic container (2), in which the electronic component (10) is storable, wherein the expansion device (16) is adapted for moving at least a part of the plurality of prongs (18) between a neutral position with a least distance between the prongs (18) and at least one expansion position with a distance between the prongs (18) exceeding the least distance, wherein the prong tips (20) each comprise a curved engagement surface (22), which faces into a direction at an angle relative to the main extension direction of the respective prong (18),
- moving the prong tips (20) into an expanded position such that the top lip (8) is expanded from an initial position into an expanded position,
- installing or removing the electronic component (10) and
- releasing the prong tips (20), such that the top lip (8) of the container (2) reverts to the initial position.

13. The method of claim 12,
wherein the prongs (18) stay parallel to each other while moving the prong tips (20) into the expanded position.

## Patentansprüche

1. Vorrichtung (14) für das Installieren und Entfernen einer elektronischen Komponente (10) für einen Reifen, **dadurch gekennzeichnet, dass** die Vorrichtung (14) Folgendes umfasst: eine Spreizeinrichtung (16) mit mehreren beweglich gestützten Längsstiften (18) mit einer Haupterstreckungsrichtung,
wobei die Spreizeinrichtung (16) ausgelegt ist zum Bewegen mindestens eines Teils der mehreren Stifte (18) zwischen einer Neutralposition mit einem kleinsten Abstand zwischen den Stiften (18) und mindestens einer Spreizposition mit einem den kleinsten Abstand übersteigenden Abstand zwischen den Stiften (18),
wobei die Stifte (18) Stiftspitzen (20) umfassen, wobei jede eine gekrümmte Eingriffsoberfläche (22) umfasst, die in eine Richtung unter einem Winkel relativ zu der Haupterstreckungsrichtung des jeweiligen Stifts (18) weist,
wobei jeder Stift (18) ausgelegt ist zur Ineingriffnahme einer exponierten oberen Lippe (18) eines elastischen Behälters (2), in dem die elektronische Komponente (10) speicherbar ist, und
wobei die Spreizeinrichtung (16) ausgelegt ist zum Bewegen mindestens eines Teils der mehreren Stifte (18) zu mindestens einer der mindestens einen Spreizposition, wobei die Eingriffsoberflächen (22) die obere Lippe (8) des Behälters (2) in Eingriff nehmen, wobei in der Spreizposition die obere Lippe gespreizt ist.

2. Vorrichtung (14) nach Anspruch 1,
wobei die Stifte (18) im Wesentlichen parallel zueinander angeordnet sind.

3. Vorrichtung (14) nach Anspruch 1 oder 2,
wobei die gekrümmte Eingriffsoberfläche (22) jeder der mehreren Stifte (18) in einer Richtung senkrecht zu der Haupterstreckungsrichtung des jeweiligen Stifts (18) weist.

4. Vorrichtung (14) nach einem der vorhergehenden Ansprüche,
wobei die Eingriffsoberfläche (22) als ein ein C-Profil umfassender Kanal ausgebildet ist, wobei sich der Kanal mindestens teilweise entlang eines Segments eines die Stifte (18) umgebenden Kreises erstreckt.

5. Vorrichtung (14) nach Anspruch 4,
wobei das C-Profil in einer von den Stiften weg weisenden Richtung offen ist.

6. Vorrichtung (14) nach Anspruch 4 oder 5,
wobei der Kanal Schenkel (30) umfasst, die in einem Abstand zueinander in der Haupterstreckungsrichtung des jeweiligen Stifts (18) angeordnet sind,
wobei der Abstand zwischen den Schenkeln (30) 5 mm oder weniger beträgt.

7. Vorrichtung (14) nach Anspruch 6,
wobei die Schenkel (30) parallel zueinander verlaufen.

8. Vorrichtung (14) nach einem der vorhergehenden Ansprüche,
wobei die Stiftspitzen (20) ein metallisches Material umfassen.

9. Vorrichtung (14) nach einem der vorhergehenden Ansprüche,
wobei jeder Stift (18) und die jeweilige Stiftspitze (20) integral miteinander ausgebildet sind.

10. Vorrichtung (14) nach einem der vorhergehenden Ansprüche,
wobei die Eingriffsoberflächen (22) eine Beschichtung (34) aus einem Kunststoffmaterial umfassen.

11. Vorrichtung (14) nach einem der vorhergehenden Ansprüche,
wobei die Spreizeinrichtung (16) ein Spreizwerkzeug vom Manschettentyp mit austauschbaren Stiften ist.

12. Verfahren zum Installieren oder Entfernen einer elektronischen Komponente (10) für einen Reifen, **dadurch gekennzeichnet, dass** das Verfahren die folgenden Schritte umfasst:
- Ineingriffnahme von Stiftspitzen (20) von mindestens einem Teil von mehreren beweglich gestützten Längsstiften (18) mit einer Haupterstreckungsrichtung, einer Spreizeinrichtung (16) in einer exponierten oberen Lippe (8) eines elastischen Behälters (2), in dem die elektronische Komponente (10) speicherbar ist, wobei die Spreizeinrichtung (16) ausgelegt ist zum Bewegen mindestens eines Teils der mehreren Stifte (18) zwischen einer Neutralposition mit einem kleinsten Abstand zwischen den Stiften (18) und mindestens einer Spreizposition mit einem den kleinsten Abstand übersteigenden Abstand zwischen den Stiften (18), wobei die Stiftspitzen (20) jeweils eine gekrümmte Eingriffsoberfläche (22) umfassen, die in eine Richtung unter einem Winkel relativ zur Haupterstreckungsrichtung des jeweiligen Stifts (18) weist,
- Bewegen der Stiftspitzen (20) in eine gespreizte Position derart, dass die obere Lippe (8) von einer Anfangsposition in eine gespreizte Position gespreizt wird,
- Installieren oder Entfernen der elektronischen Komponente (10) und
- Freigeben der Stiftspitzen (20), so dass die obere Lippe (8) des Behälters (2) zur Anfangsposition zurückkehrt.

13. Verfahren nach Anspruch 12,
wobei die Stifte (18) parallel zueinander bleiben, während die Stiftspitzen (20) in die gespreizte Position bewegt werden.

## Revendications

1. Appareil (14) pour la pose et la dépose d'un composant électronique (10) pour un pneumatique, **caractérisé en ce que** l'appareil (14) comprend un dispositif d'élargissement (16) comportant une pluralité de branches (18) longitudinales, supportées de manière mobile, présentant une direction d'étendue principale,
le dispositif d'élargissement (16) étant conçu pour déplacer au moins une partie de la pluralité de branches (18) entre une position neutre avec une distance minimale entre les branches (18) et au moins une position d'élargissement avec une distance entre les branches (18) supérieure à la distance minimale,
les branches (18) comprenant des extrémités de branches (20), qui comprennent chacune une surface de mise en prise (22) incurvée, qui est orientée dans une direction s'étendant à un angle par rapport à la direction d'étendue principale de la branche (18) respective,
chaque branche (18) étant conçue pour venir en prise avec une lèvre supérieure (8) exposée d'un réceptacle (2) élastique, dans lequel le composant électronique (10) peut être stocké et le dispositif d'élargissement (16) étant conçu pour déplacer au moins une partie de la pluralité de branches (18) jusqu'à la ou au moins une des positions d'élargissement, les surfaces de mise en prise (22) venant en prise avec la lèvre supérieure (8) du réceptacle (2), la lèvre supérieure étant élargie dans ladite position d'élargissement.

2. Appareil (14) selon la revendication 1,
dans lequel les branches (18) sont agencées de manière essentiellement parallèle les unes par rapport aux autres.

3. Appareil (14) selon la revendication 1 ou 2,
dans lequel la surface de mise en prise (22) incurvée de chaque branche de la pluralité de branches (18) est orientée dans une direction perpendiculaire à la direction d'étendue principale de la branche (18) respective.

4. Appareil (14) selon l'une quelconque des revendications précédentes,
dans lequel la surface de mise en prise (22) est réalisée sous la forme d'un canal comprenant un profil en C, dans lequel le canal s'étend au moins partiellement le long d'un segment d'un cercle entourant les branches (18).

5. Appareil (14) selon la revendication 4,
dans lequel le profil en C est ouvert dans une direction orientée de sorte qu'elle s'éloigne des branches.

6. Appareil (14) selon la revendication 4 ou 5,
dans lequel le canal comprend des ailettes (30) disposées à une certaine distance l'une de l'autre dans la direction d'étendue principale de la branche (18) respective,
dans lequel la distance entre les ailettes (30) est de 5 mm ou moins.

7. Appareil (14) selon la revendication 6,
dans lequel les ailettes (30) sont parallèles l'une à l'autre.

8. Appareil (14) selon l'une quelconque des revendications précédentes,
dans lequel les extrémités de branches (20) comprennent un matériau métallique.

9. Appareil (14) selon l'une quelconque des revendications précédentes,
dans lequel chaque branche (18) et l'extrémité de branche (20) respective sont formées d'un seul tenant.

10. Appareil (14) selon l'une quelconque des revendications précédentes,
dans lequel les surfaces de mise en prise (22) comprennent un revêtement (34) composé d'une matière plastique.

11. Appareil (14) selon l'une quelconque des revendications précédentes,
dans lequel le dispositif d'élargissement (16) est un outil d'élargissement de type manchon comportant des branches remplaçables.

12. Procédé de pose ou de dépose d'un composant électronique (10) pour un pneumatique, **caractérisé en ce que** le procédé comprend les étapes suivantes :
- mettre des extrémités de branches (20) d'au moins une partie d'une pluralité de branches (18) longitudinales, supportées de manière mobile, présentant une direction d'étendue principale, d'un dispositif d'élargissement (16) en prise avec une lèvre supérieure (8) exposée d'un réceptacle (2) élastique, dans lequel le composant électronique (10) peut être stocké, le dispositif d'élargissement (16) étant conçu pour déplacer au moins une partie de la pluralité de branches (18) entre une position neutre avec une distance minimale entre les branches (18) et au moins une position d'élargissement avec une distance entre les branches (18) supérieure à la distance minimale, les extrémités de branches (20) comprenant chacune une surface de mise en prise (22) incurvée, qui est orientée dans une direction s'étendant à un angle par rapport à la direction d'étendue principale de la branche (18) respective,
- déplacer les extrémités de branches (20) jusqu'à une position d'élargissement de telle sorte que la lèvre supérieure (8) soit élargie d'une position initiale à une position élargie,
- poser ou déposer le composant électronique (10) et
- dégager les extrémités de branches (20), de telle sorte que la lèvre supérieure (8) du réceptacle (2) revienne à la position initiale.

13. Procédé selon la revendication 12,
dans lequel les branches (18) restent parallèles les unes aux autres au cours du déplacement des extrémités de branches (20) jusqu'à la position élargie.
